# EUROPÄISCHE PATENTSCHRIFT

(11) **EP 2 722 952 B1**
(45) Veröffentlichungstag und Bekanntmachung des Hinweises auf die Patenterteilung: **05.10.2016**
(21) Anmeldenummer: 13176253.6
(22) Anmeldetag: 12.07.2013
(51) Int. Cl.: H02G 3/18, H02G 3/14

(54) **Elektrisches Installationsgerät**
Electrical installation device
Appareil d'installation électrique

(30) Priorität: 17.10.2012 DE 102012109885
(43) Veröffentlichungstag der Anmeldung: 23.04.2014
(73) Patentinhaber: Berker GmbH & Co. KG, 58579 Schalksmühle (DE)
(72) Erfinder: Diegmann, Rolf Dieter, 58579 Schalksmühle (DE); Krause, Burkhard, 44137 Dortmund (DE)
(74) Vertreter: Nuss, Laurent

(56) Entgegenhaltungen:
- DE-A1- 4 307 896
- DE-A1- 10 020 216
- DE-B3-102006 018 800
- DE-B3-102010 016 222

## Beschreibung

Die vorliegende Erfindung geht von einem gemäß Oberbegriff des Hauptanspruches konzipierten elektrischen Installationsgerät aus, welches z.B. aus der DE 10 2010 016222 B3 bekannt geworden ist.

Derartige elektrische Installationsgeräte sind in der Regel dafür vorgesehen, eine Vielzahl von in Gebäuden installierten Aktoren (Jalousieantriebe, Beleuchtungseinrichtungen, Fühler, Wächter usw.) bedarfsgerecht zu beeinflussen. Zu diesem Zweck sind die unterschiedlichsten Installationseinrichtungen, wie Schalter, Taster, Dimmer usw. bekannt geworden. Zur ordnungsgemäßen Installation an bzw. in einer Wandung weisen solche elektrischen Installationsgeräte einen oftmals rahmenartig oder plattenförmig ausgeführten Träger auf. Somit ist eine einfache Befestigung solcher elektrischen Ilnstallationsgeräte sowohl in bzw. an einer Installationsdose oder aber direkt auf einer Wand möglich.

Durch die DE 102 59 605 B3 ist ein weiteres elektrisches Installationsgerät für die Gebäudesystemtechnik bekannt geworden. Bei diesem elektrischen Installationsgerät ist ein Träger zur sicheren und positionsgerechten Installation auf einer Wandung vorgesehen, wobei am Träger zumindest ein mit dem Gehäuse des elektrischen Installationsgerätes kooperierendes Befestigungsmittel angebracht ist. Dieses Befestigungsmittel ermöglicht bereits eine einfache und sichere Montage des elektrischen Installationsgerätes an seinem Einbauort. Soll das elektrische Installationsgerät jedoch nicht in einer Installationsdose, sondern direkt auf der Wand befestigt werden, ist eine korrekte Montage nicht immer auf einfache Art und Weise möglich.

Ausgehend von einem derart ausgebildeten elektrischen Installationsgerät liegt der vorliegenden Erfindung die Aufgabe zugrunde, ein Installationsgerät zu schaffen, welches auch bei einer direkten Installation auf einer Wandung auf einfache Art und Weise eine korrekte Montage mit automatischem Höhenausgleich bzw. "Putz-/Tapetenausgleich" bei komfortabeler und sicherer Festlegung ermöglicht.

Erfindungsgemäß wird diese Aufgabe durch die im Hauptanspruch angegebenen Merkmale gelöst.

Bei einer solchen Ausbildung ist besonders vorteilhaft, dass bei geringer Bauhöhe für die Befestigung des elektrischen Installationsgerätes hohe Anpresskräfte erzeugt werden, welche das elektrische Installationsgerät automatisch an die Wand beziehungsweise Wandung herandrücken, so dass mit großer Sicherheit eine spielfrei auf der Wand anliegende Montage erfolgt. Außerdem ist besonders vorteilhaft, dass sowohl der Zwischenrahmen, als auch das Schiebestück und der Träger bei einfacher Herstellung besonders robust ausgeführt sind und dabei das Schiebestück durch seine V-förmige Kontur Federeigenschaften aufweist.

Weitere vorteilhafte Ausgestaltungen des erfindungsgemäßen Gegenstandes sind in den Unteransprüchen angegeben. Anhand eines Ausführungsbeispieles sei die Erfindung im Prinzip näher erläutert. Dabei zeigen:
- Fig. 1:: prinziphaft räumlich eine Explosionsdarstellung eines solchen elektrischen Installationsgerätes;
- Fig. 2:: prinziphaft den Träger als Einzelteil direkt nach seiner Herstellung mit zwei einstückig angeformten Schiebestücken räumlich;
- Fig. 3:: prinziphaft den auf der Wandung festgelegten Träger mit Abdeckrahmen, das fertig montierte Funktionsmodul und die Betätigungswippe räumlich in Explosionsdarstellung;
- Fig. 4:: prinziphaft das gemäß Figur 1 bzw. Figur 3 ausgebildete elektrische Installationsgerät kurz bevor das Funktionsmodul am Träger festgelegt wird;
- Fig. 5:: prinziphaft in vergrößerter Darstellung das Detail D gemäß Figur 4;
- Fig. 6:: prinziphaft das gemäß Figur 1 bzw. Figur 3 ausgebildete elektrische Installationsgerät, nachdem das Funktionsmodul am Träger festgelegt wurde.

Wie aus den Figuren hervorgeht, besteht ein solches elektrisches Installatiönsgerät im Wesentlichen aus einem mehrteilig aufgebauten Funktionsmodul 1, welches unter Zwischenschaltung eines Abdeckrahmens 2 und eines Trägers 3 direkt auf einer Wand beziehungsweise Wandung W angebracht werden kann. Zumindest eine, am Funktionsmodul 1 festlegbare Betätigungswippe 4 ist ebenfalls Bestandteil eines solchen elektrischen Installationsgerätes. Wie des Weiteren aus den Figuren hervorgeht, besteht das Funktionsmodul 1 im Wesentlichen aus einem Funktionsblock 5 und einem daran festlegbaren Zwischenrahmen 6. Das Gehäuse des Funktionsmoduls 1 weist also einen Zwischenrahmen 6 auf. Über miteinander in Wirkverbindung kommende Rastelemente 5a, 6a wird der Zwischenrahmen 6 am Funktionsblock 5 festgelegt.

Der Träger 3 dieses elektrischen Installationsgerätes ist rahmenförmig ausgebildet und mit mehreren Ausnehmungen 7 für eine direkte Schraubmontage an einer Wandung W oder Installationsdose (nicht dargestellt) vorgesehen. Des Weiteren weist der Träger 3 an seiner Rückseite eine für eine Klebeverbindung mit einer Wandung W geeignete Fläche auf. Zur Klebemontage des Trägers 3 kann zum Beispiel ein beidseitig haftender Klebeträger (nicht dargestellt) Verwendung finden.

Wie des Weiteren aus den Figuren hervorgeht, weist der Zwischenrahmen 6 des Funktionsmoduls 1 zwei Führungsbahnen 8 auf, wobei in jeder Führungsbahn 8 ein Schiebestück 9 verschieblich gelagert ist, beziehungsweise gelagert werden kann. Die beiden Schiebestücke 9 sind dafür vorgesehen, das Funktionsmodul 1 auf einfache Art und Weise sicher am Träger 3 zu befestigen. Zu diesem Zweck wirkt jedes der beiden Schiebestücke 9 mit einem, am Träger 3 vorhandenen, Befestigungsmittel 10 zusammen. Die beiden Befestigungsmittel 10 sind hakenförmig ausgebildet und stehen von der, dem Funktionsmodul 1 zugewandten Hauptfläche 11 des Trägers 3 ab.

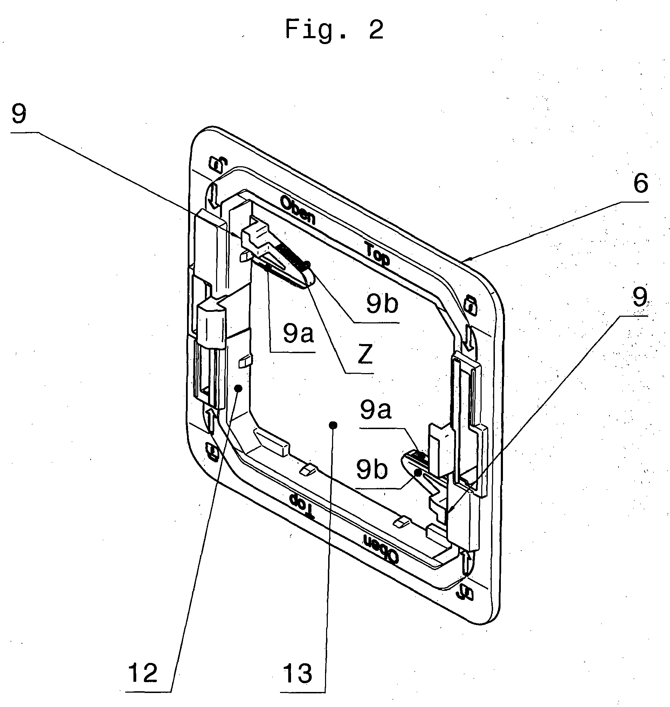

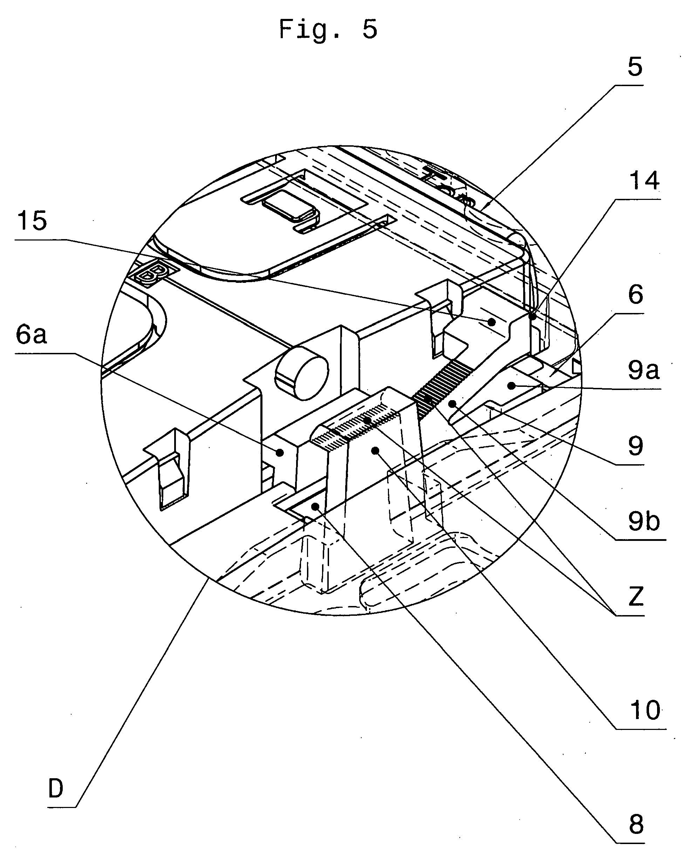

Wie insbesondere aus Figur 2 hervorgeht, sind die beiden Schiebestücke 9 einstückig an die innere Rahmenfläche 12 des Trägers 3 angeformt und ragen dabei in die Rahmenöffnung 13 hinein. Leicht können die beiden Schiebestücke 9 vom Benutzer von der inneren Rahmenfläche 12 abgelöst werden, um anschließend vom Benutzer in die beiden Führungsbahnen 8 eingesetzt zu werden. Die beiden Schiebestücke 9 befinden sich dann in ihrer Ausgangs- bzw. Entriegelungsstellung. Wie des Weiteren insbesondere aus Fig. 2 und Fig. 5 hervorgeht, weisen die beiden Schiebestücke 9 zur Realisierung von Federeigenschaften eine V-förmige Kontur auf. Der erste Schenkel 9a ist zum Zusammenwirken mit der zugehörigen Führungsbahn 8 vorgesehen und der zweite Schenkel 9b der beiden Schiebestücke 9 wirkt mit dem zugehörigen Befestigungsmittel 10 des Trägers 3 zusammen. Zur Realisierung einer besonders sicheren Verriegelung von Funktionsmodul 1 und Träger 3, weisen sowohl der zweite Schenkel 9b eines jeden Schiebestücks 9, als auch die dem zweiten Schenkel 9b zugewandte Wirkfläche eines jeden Befestigungsmittels 10 eine Verzahnung Z auf. Sowohl der Träger 3 als auch der Zwischenrahmen 6 mit seinen beiden Schiebestücken 9 sind gänzlich aus Kunststoff hergestellt. Zum Zwecke der einfachen Handhabung durch den Benutzer weist jedes Schiebestück 9 zum Zweck der Verriegelung von Funktionsmodul 1 und Träger 3 eine erste Betätigungsfläche 14 und zum Zweck der Entriegelung von Funktionsmodul 1 und Träger 3 eine zweite Betätigungsfläche 15 auf.

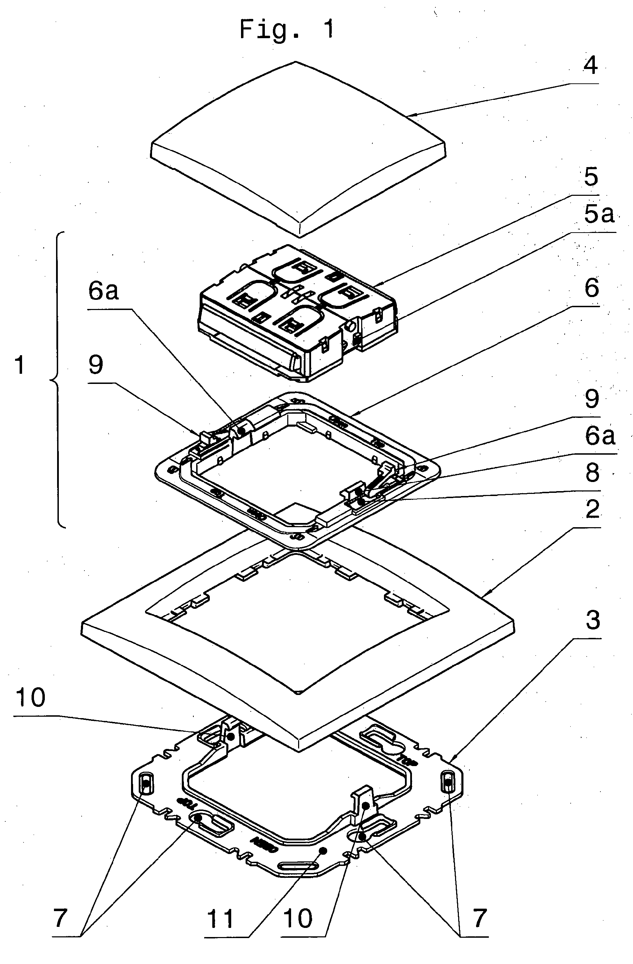

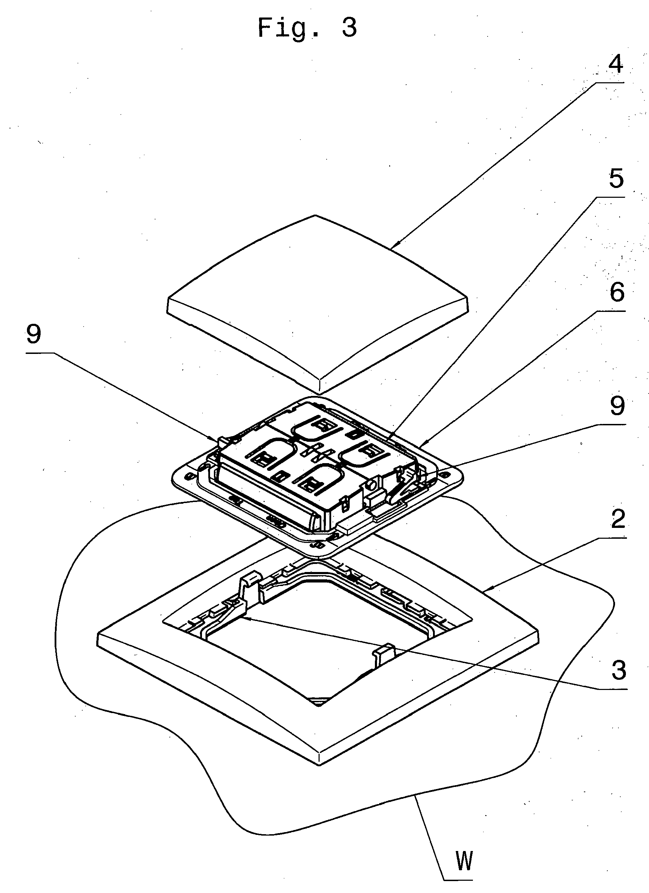

Im Gegensatz, wie in Figur 2 dargestellt, befinden sich die beiden Schiebestücke 9 in den Figuren 1 und 3 bis 6 nicht mehr einstückig am Träger 3, sondern sind bereits vom Benutzer vom Träger 3 abgelöst und in ihre zugehörige Führungsbahn 8 eingesetzt worden. Figur 1 zeigt zudem das Funktionsmodul 1 noch vereinzelt in seine beiden Komponenten, nämlich Funktionsblock 5 und Zwischenrahmen 6. Über die miteinander in Wirkverbindung kommenden Rastelemente 5a und 6a werden Funktionsblock 5 und Zwischenrahmen 6 sicher miteinander verbunden. Somit stellt das Funktionsmodul 1 dann eine Einheit dar, wie dies insbesondere aus Figur 3, 4 und 6 hervorgeht.

In Figur 3 ist der bereits auf der Wandung W festgelegte Träger 3 mit Abdeckrahmen 2 dargestellt, wobei das fertig montierte Funktionsmodul 1 und die Betätigungswippe 4 zur baldigen Komplettierung des elektrischen Installationsgerätes vorgesehen, dargestellt sind.

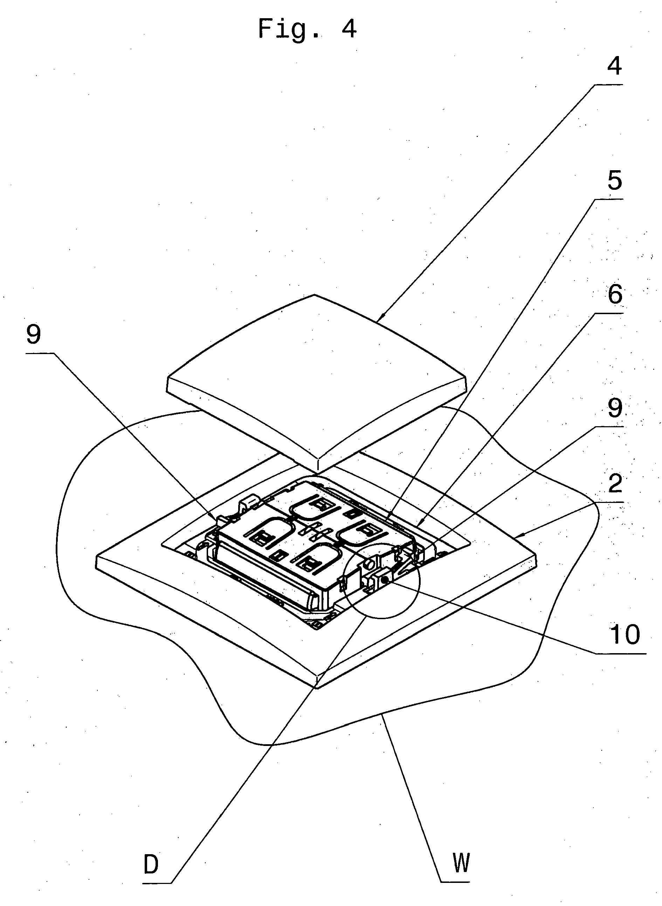

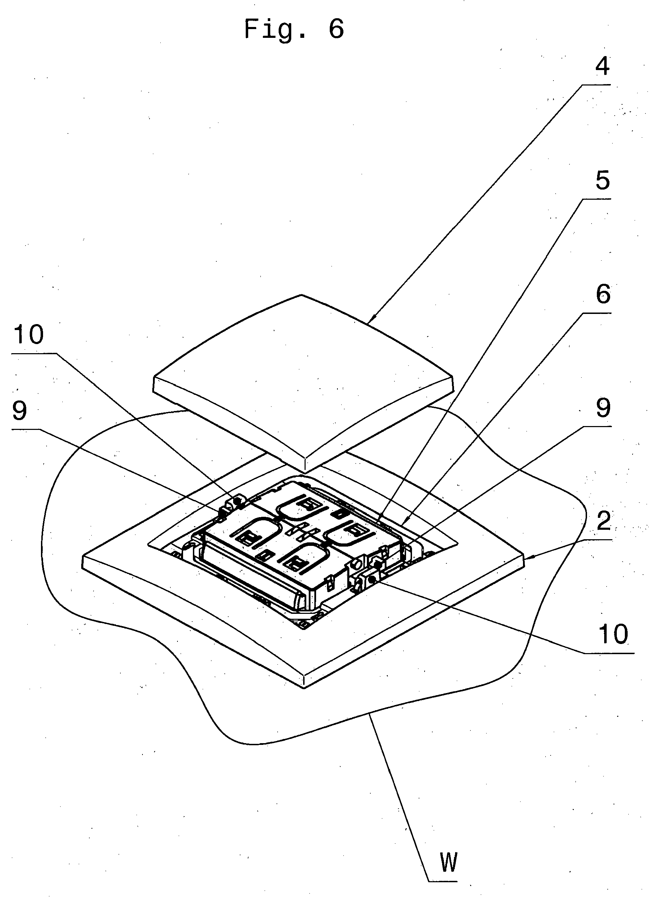

Figur 4 zeigt das elektrische Installationsgerät kurz bevor das Funktionsmodul 1 am Träger 3 festgelegt wird. Zu diesem Zweck befinden sich die beiden Schieber 9 in ihrer Ausgangs- bzw. Entriegelungsstellung. Ausgehend von dieser Ausgangs- bzw. Entriegelungsstellung kann der Benutzer die beiden Schieber 9 über ihre ersten Betätigungsflächen 12 auf einfache Art und Weise in die Verriegelungsstellung verschieben, wie dies insbesondere aus Figur 6 hervorgeht. Beim Verschieben kommen die Federeigenschaftender Schiebestücke 9 zum tragen, weil die beiden Schenkel 9a und 9b durch das Zusammenwirken mit dem zugeordneten Befestigungsmittel 10 zusammengedrückt werden. Durch die V-förmige Kontur der Schiebestücke 9 ist somit auf einfache Art und Weise automatisch ein Höhenausgleich bzw. "Putz-/ Tapetenausgleich" bei hoher Anpresskraft an die Wandung W realisiert. Will der Benutzer die beiden Schieber 9 dann wieder aus ihrer Verriegelungsstellung herausbewegen, kann er dieses über die Betätigung der zweiten Betätigungsfläche 13 auf einfache Art und Weise einleiten. Durch Druck auf die zweiten Betätigungsflächen 13 werden die Schiebestücke 9 entgegen ihren Federeigenschaften zusammengedrückt, so dass diese dann einfach wieder in ihre Ausgangs- bzw. Entriegelungsstellung verschoben werden können. Die Federeigenschaften der beiden Schiebestücke 9 ergeben sich - wie bereits erwähnt - durch deren V-förmige Kontur, wie dies insbesondere aus Figur 2 und 5 hervorgeht.

### Bezugszeichenliste:

- 1: Funktionsmodul
- 2: Abdeckrahmen
- 3: Träger
- 4: Betätigungswippe
- 5: Funktionsblock
- 5a: Rastelemente
- 6: Zwischenrahmen
- 6a: Rastelemente
- 7: Ausnehmung
- 8: Führungsbahn
- 9: Schiebestück
- 9a: erster Schenkel
- 9b: zweiter Schenkel
- 10: Befestigungsmittel
- 11: Hauptfläche
- 12: Innere Rahmenfläche
- 13: Rahmenöffnung
- 14: Erste Betätigungsfläche
- 15: Zweite Betätigungsfläche

- W: Wandung
- Z: Verzahnung

## Patentansprüche

1. Elektrisches Installationsgerät, wie Schalter, Taster, Bewegungsmelder und dergleichen, mit einem Träger, der zur sicheren und positionsgerechten Festlegung des elektrischen Installationsgerätes auf einer Wandung dient, wobei am Träger Befestigungsmittel vorhanden sind, welche mit einem am Gehäuse des Funktionsmodul des elektrischen Installationsgerätes angebrachten Befestigungselement haltend in Anlage kommen, **dass** das Gehäuse des Funktionsmoduls (1) einen Zwischenrahmen (6) aufweist **dadurch gekennzeichnet dass** der Zwischenrahmen (6) mit zumindest einer Führungsbahn (8) versehen ist, in welcher ein, als Befestigungselement ausgebildetes, Schiebestück (9) verschieblich gelagert ist, welches zur Festlegung des Funktionsmoduls (1) am Träger (3) haltend mit einem am Träger (3) vorhandenen Befestigungsmittel (10) zusammenwirkt.

2. Elektrisches Installationsgerät nach Anspruch 1, **dadurch gekennzeichnet, dass** zumindest ein Befestigungsmittel (10) hakenförmig ausgebildet und einstückig an den Träger (3) angeformt ist.

3. Elektrisches Installationsgerät nach einem der Ansprüche 1 oder 2, **dadurch gekennzeichnet, dass** zumindest ein Schiebestück (9) zumindest einen, Federeigenschaften aufweisenden, Wirkbereich aufweist.

4. Elektrisches Installationsgerät nach einem der Ansprüche 1 bis 3, **dadurch gekennzeichnet, dass** am Schiebestück (9) und/oder dass am Befestigungsmittel (10) des Trägers (3) eine Verzahnung (Z) vorhanden ist.

5. Elektrisches Installationsgerät nach einem der Ansprüche 1 bis 4, **dadurch gekennzeichnet, dass** zumindest ein Schiebestück (9) leicht ablösbar einstückig an den Träger (3) angeformt ist.

6. Elektrisches Installationsgerät nach einem der Ansprüche 1 bis 5, dadurch - gekennzeichnet, dass der Träger (3) und/oder das Schiebestück (9) zumindest teilweise aus Kunststoff bestehen.

7. Elektrisches Installationsgerät nach einem der Ansprüche 1 bis 6, **dadurch gekennzeichnet, dass** der Träger (3) und/oder das Schiebestück (9) zumindest teilweise aus Metall bestehen.

8. Elektrisches Installationsgerät nach einem der Ansprüche 1 bis 7, **dadurch gekennzeichnet, dass** der Träger (3) zumindest eine zur Schraubbefestigung an einer Wandung (W) vorgesehene Ausnehmung (7) und/oder Ausnehmungsvorrüstung aufweist.

9. Elektrisches Installationsgerät nach einem der Ansprüche 1 bis 8, **dadurch gekennzeichnet, dass** der Träger (3) zumindest mit einer, eine Klebebefestigung an einer Wandung (W) ermöglichenden Fläche versehen ist.

10. Elektrisches Installationsgerät nach einem der Ansprüche 1 bis 9, **dadurch gekennzeichnet, dass** zumindest ein Schiebestück (9) zum Zweck der Verriegelung von Funktionsmodul (1) und Träger (3) mit einer ersten Betätigungsfläche (14) versehen ist.

11. Elektrisches Installationsgerät nach einem der Ansprüche 1 bis 10 **dadurch gekennzeichnet, dass** zumindest ein Schiebestück (9) zum Zweck der Entriegelung von Funktionsmodul (1) und Träger (3) mit einer zweiten Betätigungsfläche (15) versehen ist.

## Claims

1. Electrical installation device, such as a switch, pushbutton, motion sensor and the like, having a support which is used to fix the electrical installation device securely in the correct position on a wall, wherein fastening means are provided on the support, which fastening means come into contact in a retaining manner with a fastening element attached to the housing of the functional module of the electrical installation device, the housing of the functional module (1) having an intermediate frame (6), **characterised in that** the intermediate frame (6) is provided with at least one guide track (8), into which is displaceably mounted a slide (9) which is configured as a fastening element and cooperates in a retaining manner with a fastening means (10) present on the support (3) in order to fix the functional module (1) on the support (3).

2. Electrical installation device according to claim 1, **characterised in that** at least one fastening means (10) is hook-shaped and is formed integrally with the support (3).

3. Electrical installation device according to either claim 1 or claim 2, **characterised in that** at least one slide (9) has at least one effective region with spring characteristics.

4. Electrical installation device according to any one of claims 1 to 3, **characterised in that** a tooth system (Z) is present on the slide (9) and/or on the fastening means (10) of the support (3).

5. Electrical installation device according to any one of claims 1 to 4, **characterised in that** at least one slide (9) is formed integrally with the support (3) such that it can be easily detached.

6. Electrical installation device according to any one of claims 1 to 5, **characterised in that** the support (3) and/or the slide (9) consist at least partly of plastic material.

7. Electrical installation device according to any one of claims 1 to 6, **characterised in that** the support (3) and/or the slide (9) consist at least partly of metal.

8. Electrical installation device according to any one of claims 1 to 7, **characterised in that** the support (3) has at least one recess (7) and/or recess pre-fitting provided for attaching a screw to a wall (W).

9. Electrical installation device according to any one of claims 1 to 8, **characterised in that** the support (3) is at least provided with a surface allowing an adhesive attachment to a wall (W).

10. Electrical installation device according to any one of claims 1 to 9, **characterised in that** at least one slide (9) is provided with a first actuating surface (14) for the purpose of locking the functional module (1) and support (3).

11. Electrical installation device according to any one of claims 1 to 10, **characterised in that** at least one slide (9) is provided with a second actuating surface (15) for the purpose of unlocking the functional module (1) and support (3).

## Revendications

1. Appareil d'installation électrique, tel que interrupteur, bouton-poussoir, détecteur de mouvement et analogue, avec un support qui sert à la fixation sûre et en bonne position de l'appareil d'installation électrique sur une paroi, des moyens de fixation étant présents sur le support, lesquels viennent en appui avec maintien sur un élément de fixation disposé sur le boîtier du module fonctionnel de l'appareil d'installation électrique, le boîtier du module fonctionnel (1) présentant un cadre intermédiaire (6), **caractérisé en ce que** le cadre intermédiaire (6) est pourvu d'au moins une glissière (8) dans laquelle une pièce coulissante (9) conçue comme un élément de fixation est montée coulissante, laquelle coopère avec un moyen de fixation (10) présent sur le support (3) pour la fixation du module fonctionnel (1) sur le support (3) avec maintien.

2. Appareil d'installation électrique selon la revendication 1, **caractérisé en ce qu'**au moins un moyen de fixation (10) est réalisé en forme de crochet et formé d'un seul tenant avec le support (3).

3. Appareil d'installation électrique selon l'une des revendications 1 ou 2, **caractérisé en ce qu'**au moins une pièce coulissante (9) présente au moins une zone active présentant des propriétés élastiques.

4. Appareil d'installation électrique selon l'une des revendications 1 à 3, **caractérisé en ce qu'**une denture (Z) est présente sur la pièce coulissante (9) et/ou sur le moyen de fixation (10) du support (3).

5. Appareil d'installation électrique selon l'une des revendications 1 à 4, **caractérisé en ce qu'**au moins une pièce coulissante (9) est formée d'un seul tenant avec le support (3) et est facilement détachable du support (3).

6. Appareil d'installation électrique selon l'une des revendications 1 à 5, **caractérisé en ce que** le support (3) et/ou la pièce coulissante (9) sont constitués au moins partiellement de matière plastique.

7. Appareil d'installation électrique selon l'une des revendications 1 à 6, **caractérisé en ce que** le support (3) et/ou la pièce coulissante (9) sont constitués au moins partiellement de métal.

8. Appareil d'installation électrique selon l'une des revendications 1 à 7, **caractérisé en ce que** le support (3) présente au moins un évidement (7) et/ou un prééquipement pour un évidement pour la fixation par vissage à une paroi (W).

9. Appareil d'installation électrique selon l'une des revendications 1 à 8, **caractérisé en ce que** le support (3) est pourvu au moins d'une surface permettant une fixation par collage à une paroi (W).

10. Appareil d'installation électrique selon l'une des revendications 1 à 9, **caractérisé en ce qu'**au moins une pièce coulissante (9) est pourvue d'une première surface d'actionnement (14) aux fins de verrouillage du module fonctionnel (1) et du support (3).

11. Appareil d'installation électrique selon l'une des revendications 1 à 10, **caractérisé en ce qu'**au moins une pièce coulissante (9) est pourvue d'une deuxième surface d'actionnement (15) aux fins de déverrouillage du module fonctionnel (1) et du support (3).
